# EUROPEAN PATENT APPLICATION

(11) **EP 4 403 424 A1**
(43) Date of publication of application: **24.07.2024**
(21) Application number: 23152184.0
(22) Date of filing: 18.01.2023
(51) Int. Cl.: B60T 7/12, B60T 13/38

(54) **A PARKING BRAKE SYSTEM OF A TIPPER VEHICLE**

(71) Applicant: VOLVO TRUCK CORPORATION, 405 08 Göteborg (SE)
(72) Inventor: JEYAKAR M R, Amarnath, 627859 Surandai (IN); ANGADI, Sunil, 580004 Dharwad (IN)
(74) Representative: Zacco Sweden AB

(57) **Abstract**

There is presented a parking brake system (10) of a tipper vehicle (1) having a tiltable tipper body (3). The system comprises a parking brake having a brake chamber (12) which is pressurizable for releasing the parking brake. A valve device (14) is in fluid communication with the brake chamber (12), the valve device (14) comprising an exhaust port (16). The valve device (14) has an activated state in which the brake chamber (12) is in fluid communication with the exhaust port (16) whereby air from the brake chamber (12) is discharged, thereby applying the parking brake, and an inactivated state in which said fluid communication is disconnected. Upon receipt of a tipping signal (21), a neutral gear signal (23) and a low speed signal (25), and upon detecting that the parking brake is still in the released state, the valve device (14) is changed from the inactivated state to the activated state in order to exhaust air from the brake chamber (12), thereby causing the parking brake to become changed to the applied state.

## Description

### TECHNICAL FIELD

The disclosure relates generally to a parking brake system. In particular aspects, the disclosure relates to a parking brake system of a tipper vehicle. The disclosure can be applied in heavy-duty vehicles, such as rigid tipper trucks and trailer tippers. Although the disclosure may be described with respect to a particular vehicle, the disclosure is not restricted to any particular vehicle.

### BACKGROUND

A tipper truck, also known as a dump truck or dumper truck, is used for transporting materials, usually for construction. Tipper trucks have a tipper body in which material may be transported. The material is dumped from the tipper truck by tipping/tilting the tipper body. During tipping, it is recommended that the parking brake is engaged. If the parking brake is not engaged, there is a risk that the vehicle will move forward or roll when unloading the material. However, due to human error a driver may forget to apply the parking brake which may lead to an accident or create an unsafe environment. Thus, there is room for improvement when it comes to safety measures in relation to tipper trucks.

### SUMMARY

According to a first aspect of the disclosure, there is provided a parking brake system of a tipper vehicle having a tipper body from which carried material is dispensable by tipping the tipper body, the parking brake system comprising:
- a parking brake which comprises a brake chamber which is pressurizable for releasing the parking brake,
- a valve device in fluid communication with the brake chamber, the valve device comprising an exhaust port, wherein the valve device has an activated state in which the brake chamber is in fluid communication with the exhaust port whereby air from the brake chamber is discharged, thereby applying the parking brake, and an inactivated state in which the fluid communication between the exhaust port and the brake chamber is disconnected,
- a tipping detecting device configured to send a tipping signal to the valve device, the tipping signal being indicative of the tipper body being lifted,

- a neutral gear detecting device configured to send a neutral gear signal to the valve device, the neutral gear signal being indicative of the vehicle gear being in neutral,
- a speed sensing device configured to send a low speed signal to the valve device, the low speed signal being indicative of the vehicle speed being zero or below a predefined threshold speed,
- a parking brake detecting device configured to send a parking brake signal to the valve device, wherein, by detecting the presence or absence of the parking brake signal, the valve device is configured to detect whether the parking brake is in a released state or has been activated by an operator so that it is in an applied state,
wherein upon receipt of said tipping signal, said neutral gear signal and said low speed signal, and upon detecting that the parking brake is still in the released state, the valve device is changed from the inactivated state to the activated state in order to exhaust air from the brake chamber, thereby causing the parking brake to become changed to the applied state. The first aspect of the disclosure may seek to mitigate the risk of a driver omitting to engage the parking brake during a tipping operation. A technical benefit may include that the parking brake system will automatically engage the parking brake if the tipper truck is standing substantially still, is in neutral gear, a tipping action has started, and the parking brake is in a released state. By making sure that the parking brake has not yet been engaged, unnecessary wear of the valve device may be avoided, since the valve device will only change state if the parking brake is not already in the applied state.

It should be understood that the general teachings of this disclosure may be implemented for parking brakes of manual handbrakes (such as lever type hand brakes) as well as for electronic parking brake switches. It should also be understood that electronics of the parking brake detecting device may be configured in various different ways. For instance, in some examples, the parking brake detecting device may be designed such that the parking brake signal is sent to the valve device when the parking brake is in its applied state. In such cases, detecting the absence of the parking brake signal may cause the valve device to detect that the parking brake is in its released state. Conversely, in other examples, the parking brake detecting device may be designed such that the parking brake signal is sent when the parking brake is in its released state. In such cases, detecting the presence of the parking brake signal may cause the valve device to detect that the parking brake is in its released state.

The tipping signal, the neutral gear signal, the low speed signal and the parking brake signal may, for example, be implemented as simple voltage signals. For instance, a voltage of 12 V or 24 V represents signal ON, while 0 V represents signal OFF.

In some examples, said valve device is a first valve device and said exhaust port is a first exhaust port, the parking brake system further comprising:
- a second valve device comprising a second exhaust port,
   wherein when the first valve device is in the inactivated state it allows fluid communication between the second valve device and the brake chamber,
   wherein the second valve device has an activated state and an inactivated stated,
   wherein when the first valve device is in its inactivated state and the second valve device is in the activated state, then the brake chamber is in fluid communication with the second exhaust port, whereby air from the brake chamber is discharged, thereby applying the parking brake,
   wherein when the second valve device is in the inactivated state, then pressurized air from a pressurized air source is allowed to pass through the second valve device to the first valve device.
A technical benefit may include that by providing two valve devices, one of the valve device (the second valve device) may be used for normal driver-initiated engagement of the parking brake, while the other valve device (the first valve device) functions as a back-up in case the driver has omitted to engage the parking brake. Furthermore, since the first valve device will only change state if the second valve device has not been activated for applying the parking brake, the first valve device will not be used when not needed, thereby reducing the wear of the first valve device.

In some examples, the parking brake system further comprises an operator-controlled device which is operatively connected to the second valve device, thereby enabling an operator to switch between the activated state and the inactivated state of the second valve device. As mentioned above, a technical benefit may include that the second valve device may be used for normal driver-initiated engagement of the parking brake, while the first valve device may function as a back-up in case the driver has omitted to engage the parking brake. The operator-controlled device may in some examples be an electronic parking switch. The operator-controlled device may be thus, in some examples, be configured to send an electrical signal to the second valve device to change from the inactivated state to the activated state of the second valve device, or vice versa. In some examples, the operator-controlled device may include or be in the form of a hand brake lever. Thus, in some examples the operator-controlled device may be configured to mechanically move the second valve device from its inactivated state to its activated state, or vice versa.

In some examples, unless it is indicated to the first valve device that the tipper body is being lifted, as well as the vehicle gear is in neutral, as well as the vehicle speed being zero or below a predefined threshold, then the first valve is in the inactivated state, thereby allowing the applying/releasing of the parking brake to be controlled by controlling the state of the second valve device. A technical benefit may include that normal operation of the parking brake is allowed if the first valve device gets indication that the vehicle is not presently in the process of performing a stationary tipping operation. For instance, in some cases, a driver may wish to spread the material over a larger area on the ground and may therefore drive the vehicle forward simultaneously with dispensing material form the tilted tipping body. In such case, although the tipper body has been lifted, it will be detected that the vehicle gear is not in neutral, and that the vehicle is driving at a certain speed. Thus, in such case the first valve device will remain in the inactivated state to avoid unwanted engagement of the parking brake. Furthermore, when the driver switches gears, for example, from third gear to fourth gear, via neutral gear, even though the gear will temporarily be in neutral during such gear switch, the valve device will remain in the inactivated state (assuming the speed of the vehicle is above the predefined threshold speed). Thus, a technical benefit of requiring both the neutral gear signal and the low speed signal to be detected, is that there is no risk that the parking brake will inadvertently be engaged when vehicle is driving at high speed during a gear switch. Purely as an illustrative example, the predefined threshold speed may be a value in the range of 10-15 km/h. Engaging the parking brake for a truck driving at 15 km/h does normally not cause any discomfort to the driver.

In some examples, the first valve device comprises a solenoid valve which is biased towards the inactivated state when it is not energized, wherein upon receipt of said tipping signal, said neutral gear signal and said low speed signal, and upon detecting that the parking brake is still in the released state, the valve device becomes energized to change from the inactivated state to the activated state. A technical benefit may include that a solenoid valve device is conveniently controllable by electric input signals.

In some examples, the solenoid valve is energized by an energization signal triggered by the receipt of said tipping signal, said neutral gear signal and said low speed signal, and the detecting that the parking brake is still in the released state, wherein when the operator-controlled device has switched the second valve device to the activated state to apply the parking brake, then any triggering of the energization signal is blocked, thereby avoiding energization of the solenoid valve. Similarly to the above discussions, a technical benefit may include that the solenoid valve will not be worn out prematurely. By including the state of the parking brake as a parameter for triggering the energization signal, superfluous energization and movement of the solenoid valve can be avoided.

In some examples, the second valve device comprise an electronically controlled valve, wherein the second valve device is switched to the activated state by an electrical signal triggered by actuation of an electronic parking switch. In some examples, the second valve device comprises a lever-operated hand brake valve, wherein moving the lever between a first position and a second position causes the second valve to change from its inactivated state to its activated state. Thus, the teachings of the present disclosure may be implemented for different operator-controlled devices.

In some examples, the parking brake system further comprises a limit switch provided at the chassis, the limit switch forming part of the tipping detecting device, wherein when the tipper body is lifted the limit switch becomes closed and the tipping signal is sent to the valve device. A technical benefit may include that a limit switch provides a reliable and convenient way to detect that the tipping body is lifted. When the tipper body is lowered back to its original position, thereby opening the switch, the tipping signal is no longer sent to the valve device, and the parking brake may be released. This logic is not limited to a limit switch, but may be implemented for other types of tipping detecting devices, i.e. when tipping signal is no longer received by the valve device, the valve device may be changed back to the inactivated state. Similarly, if the driver sets the gear in drive mode (i.e. neutral gear signal is no longer received), for example in order to distribute the carried load over a larger area, then the valve device will be changed back to the inactivated state.

In some examples, the parking brake system further comprises a speed sensor switch forming part of the speed sensing device, wherein when the vehicle speed is zero or below the predefined threshold speed the speed sensor switch becomes closed and the low speed signal is sent to the valve device. A technical benefit may include that a speed sensor switch presents an effective way to provide said low speed signal.

In some examples, the parking brake system further comprises a gear switch forming part of the neutral gear detecting device, wherein when the vehicle gear is in neutral state, the gear switch becomes closed and the neutral gear signal is sent to the valve device. A technical benefit may include that a gear switch presents an effective way to provide said neutral gear signal.

In some examples, the parking brake system further comprises a parking brake switch forming part of the parking brake detecting device, wherein when the parking brake is activated by an operator so that the parking brake becomes applied, then the parking brake switch becomes opened and the parking brake signal is disconnected from the valve device. Thus, by using a switch which opens when the parking brake is activated by an operator and effective way to disconnect the parking brake signal from the valve device is achieved. Hereby, in case of the valve device being in the form of said first valve device, it will not be activated superfluously if the second valve device has already been activated to engage the parking brake.

Providing a first valve device as a back-up and a second valve device for normal driver-initiated parking braking may be advantageous as previously discussed. Nevertheless, in some examples, it may be conceivable to use only one valve device for the parking brake system. In particular, in some examples, the valve device may comprise an electronically controlled valve operated by an electrical parking switch. The electronically controlled valve can be programmed to become activated if the driver has omitted to engage the parking brake and the electronically controlled valve has received the tipping signal, neutral gear signal and low speed signal.

According to a second aspect of the disclosure, there is provided a tipper truck vehicle comprising the parking brake system of the first aspect, including any example thereof. Technical benefits of the second aspect may largely correspond to those of the first aspect, including any examples thereof.

In some examples, the tipper vehicle is a tipper truck or a tractor trailer tipper truck. Thus, the teachings of this disclosure may advantageously be implemented for different types of tipper vehicles, and is not restricted to a particular type of tipper vehicle.

According to a third aspect of the disclosure, there is provided a method of applying a parking brake of a tipper vehicle having a tipper body from which carried material is dispensable by tipping the tipper body, the method comprising:
- receiving, by a valve device, a tipping signal indicative of the tipper body being lifted,
- receiving, by the valve device, a neutral gear signal indicative of the vehicle gear being in neutral,
- receiving, by the valve device, a low speed signal indicative of the vehicle speed being zero or below a predefined threshold speed,
- detecting, by the valve device, the presence or absence of a parking brake signal, thereby detecting, by the valve device, whether the parking brake is in the released state or has been activated by an operator so that it is in an applied state, and
- upon receipt of said tipping signal, said neutral gear signal and said low speed signal, and upon detecting that the parking brake is in the released state, fluidly connecting, by the valve device, a brake chamber of the parking brake to an exhaust port of the valve device, thereby discharging air from the brake chamber to the exhaust port, causing the parking brake to be changed to the applied state.
Technical benefits of the third aspect may largely correspond to those of the first and second aspects, including any examples thereof.

In some examples of the method of the third aspect, said valve device is the valve device of the parking brake system of the first aspect, including any examples thereof.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** illustrates a tipper vehicle according to one example, for which the teachings of this disclosure may be implemented.
**FIG. 2** illustrates a tipper vehicle according to another example, for which the teachings of this disclosure may be implemented.
**FIG. 3** illustrates very schematically a parking brake system of a tipper vehicle according to at least one example of this disclosure.
**FIGS. 4-6** illustrates schematically different states of some components in a parking brake system of a tipper vehicle, in accordance with at least one example of this disclosure.
**FIGS. 7-9** illustrates schematically different states of some components in a parking brake system of a tipper vehicle, in accordance with at least another example of this disclosure.
**FIG. 10** illustrates schematically a method of applying a parking brake of a tipper vehicle, in accordance with at least one example of this disclosure.

### DETAILED DESCRIPTION

Aspects set forth below represent the necessary information to enable those skilled in the art to practice the disclosure.

When material is dispensed from a tipper truck by tipping/tilting the tipper body, accidents may occur if the parking brake is not engaged. Sometimes the driver may inadvertently forget to engage the parking brake, and therefore the vehicle may start to move forward or roll when unloading the material, which may lead to an accident. By taking certain parameters into account, the parking brake system of the present disclosure automatically engages the parking brake if the driver has forgotten to do so. Furthermore, the parking brake system of the present disclosure also provides the advantage of not over-actuating system components, and thus avoiding unnecessary and premature wear of system components.

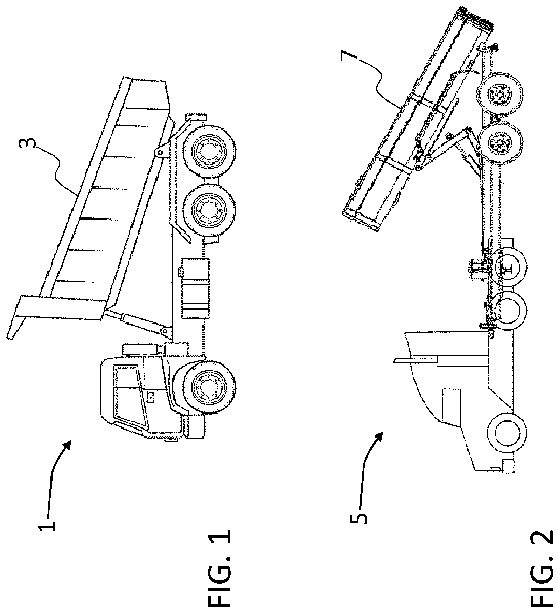

**FIG. 1** illustrates a tipper vehicle 1 according to one example, for which the teachings of this disclosure may be implemented. The tipper vehicle 1 in **FIG. 1** is in the form of a rigid tipper truck. The tipper truck comprises a tipper body 3 from which material may be dispensed. The tipper body 3 is here illustrated in its tipped position.

**FIG. 2** illustrates a tipper vehicle 5 according to another example, for which the teachings of this disclosure may be implemented. The tipper vehicle 5 is here illustrated in the form of a trailer tipper. In this cases it is the trailer part of the vehicle 5 combination that is provided with a tipper body 7. Also in this case, the tipper body 7 is illustrated in its tipped position.

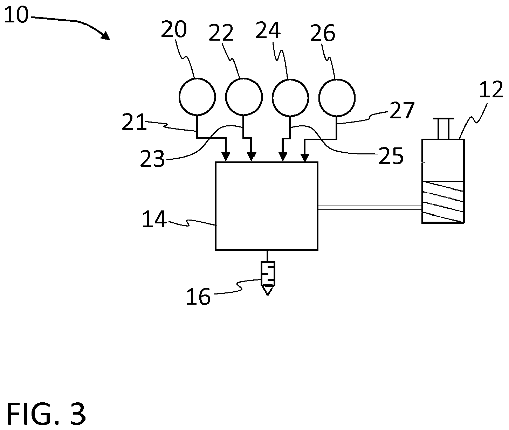

It should be understood that the different examples of a parking brake system that will be discussed in connection with **FIGS. 3-9** and which are also discussed elsewhere in this disclosure may be implemented for different types of tipping vehicles, including for the vehicles 1, 5 illustrated in **FIGS. 1** and **2****.**

**FIG. 3** illustrates very schematically a parking brake system 10 of a tipper vehicle according to at least one example of this disclosure. **FIG. 3** is very schematic and is included to provide a simple overview of some components that may be included in a parking brake system 10 according to at least one example of this disclosure. Thus, **FIG. 3** illustrates an example of a parking brake system 10 that may be used in a tipper vehicle having a tipper body from which material is dispensable by tipping the tipper body. The parking brake system 10 comprises a parking brake which comprises a brake chamber 12 which is pressurizable for releasing the parking brake. The parking brake system 10 also comprises a valve device 14. The valve device 14 is in fluid communication with the brake chamber 12. Thus, air may flow between the brake chamber 12 and the valve device 14. The valve device 14 comprises an exhaust port 16. The valve device 14 has an activated state in which the brake chamber 12 is in fluid communication with the exhaust port 16, whereby air from the brake chamber 12 is discharged. Thus, in the activated state of the valve device 14, if the brake chamber 12 contains pressurized air (which is normally the case when the parking brake has been released), then due to the pressure difference between the brake chamber 12 and the exhaust port 16 (being normally at atmospheric pressure), compressed air in the brake chamber 12 will pass through the valve device 14 and exit through the exhaust port 16. Hereby, the parking brake becomes engaged. The valve device 14 also has an inactivated state in which the fluid communication between the exhaust port 16 and the brake chamber 12 is disconnected.

**FIG. 3** also illustrates schematically that the parking brake system 10 comprises four input devices 20, 22, 24, 26. A tipping detecting device 20 is configured to send a tipping signal 21 to the valve device 14. The tipping signal 21 is indicative of the tipper body being lifted. As an example, the tipping detecting device 20 may comprise a limit switch. In such case, when the tipper body is lifted the limit switch becomes closed and the tipping signal 21 is sent to the valve device 14. A neutral gear detecting device 22 is configured to send a neutral gear signal 23 to the valve device 14. The neutral gear signal 23 is indicative of the vehicle gear being in neutral. As an example, the neutral gear detecting device 22 may comprise a gear switch. In such case, when the vehicle gear is set in neutral state the gear switch becomes closed and the neutral gear signal 23 is sent to the valve device 14. A speed sensing device 24 is configured to send a low speed signal 25 to the valve device 14. The low speed signal 25 is indicative of the vehicle speed being zero or below a predefined threshold speed. The threshold speed is suitably set at a level which is below a normal speed of the vehicle that might be used in situations when you want to spread dumped material over a larger area and therefore purposively drive the vehicle forwardly. As an example, the speed sensing device 24 may comprise a speed sensor switch. In such case, when the vehicle speed is zero or below the predefined threshold speed, the speed sensor switch becomes closed and the low speed signal 25 is sent to the valve device 14. A parking brake detecting device 26 is configured to send a parking brake signal 27 to the valve device 14. By detecting the presence or absence of the parking brake signal 27, the valve device 14 is configured to detect whether the parking brake is in a released state of has been activated by an operator so that it is in an applied state. As an example, the parking brake detecting device 26 may comprise a parking brake switch. In such case, when the parking brake is activated by an operator so that the parking brake becomes applied, then the parking brake switch may become opened so that the parking brake signal 27 is disconnected from the valve device 14.

Upon receipt of the tipping signal 21, the neutral gear signal 23 and the low speed signal 25, and upon detecting that the parking brake is still in the released state (in this example corresponding to the absence of the parking brake signal 27), the valve device 14 is changed from the inactivated state to the activated state in order to exhaust air from the brake chamber 12, thereby causing the parking brake to become changed to the applied state.

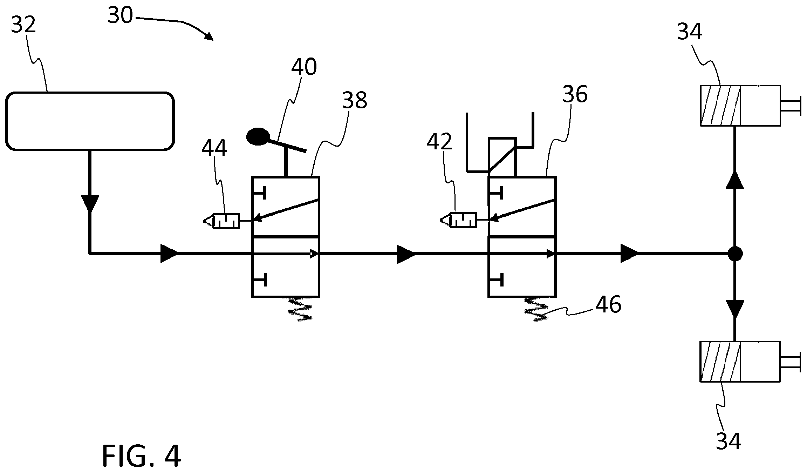

**FIGS. 4-6** illustrates schematically different states of some components in a parking brake system 30 of a tipper vehicle, in accordance with at least one example of this disclosure. Starting with **FIG. 4****,** there is illustrated a pressurized air source 32, such as a pressurized tank containing compressed air. The tank may, for example, become pressurized by means of an air compressor (not illustrated). The pressurized air source 32 may in some examples be considered to form part of the parking brake system 30 of this disclosure. In other examples, the pressurized air source 32 may be considered as not forming part of the parking brake system 30 of this disclosure, and instead forms a separate part to which the parking brake system 30 may be connected. There are illustrated two brake chambers 34, one for a left wheel and one for a right wheel, however there may be provided further parking brake chambers on a tipper vehicle, and the parking brake system 30 may thus, in at least some examples, include more than two brake chambers 34. The parking brake system 30 comprises a valve device, which may be referred to as a first valve device 36.

**FIG. 4** also illustrates that, in this example, the parking brake system 30 further comprises a second valve device 38. The second valve device 38 may be operatively connected to an operator-controlled device which enables an operator (such as a driver) to switch between an inactivated state and an activated state of the second valve device 38. For instance, the operator-controlled device may be a lever 40. In **FIG. 4****,** the second valve device 38 is indeed illustrated as comprising a lever-operated hand brake valve. When the driver moves the lever 40 from a first position to a second position (usually by pulling the lever) the second valve device 38 changes from its inactivated state to its activated state. In **FIG. 4****,** the second valve device 38 is in its inactivated state.

When the first valve device 36 is in the inactivated state it allows fluid communication between the second valve device 38 and the brake chambers 34. Furthermore, when the second valve device 38 is in the inactivated state, then pressurized air from the pressurized air source 32 is allowed to pass through the second valve device 38 to the first valve device 36. Since **FIG. 4** illustrates a case in which both the first valve device 36 and the second valve device 38 are in their respective inactivated state, pressurized air is allowed to flow from the pressurized air source 32 through the second valve device 38 and then through the first valve device 36, and then into the brake chambers 34 pressurizing them so as to hold the parking brake in a released state.

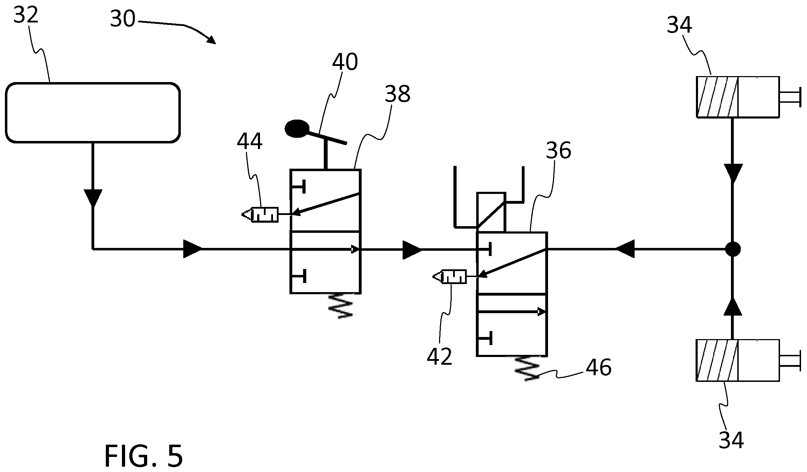

In **FIG. 5** the second valve device 38 is still in its inactivated state. The first valve device 36, however, has now been moved to its activated state. Although pressurized air can still pass from the pressurized air source 32 and through the second valve device 38, it will no longer be allowed to continue through the first valve device 36. Instead, now the brake chambers 34 are in fluid communication with an exhaust port 42 of the first valve device 36, thereby allowing the pressurized air in the brake chambers 34 to be released through the exhaust port 42 of the first valve device. The exhaust port 42 of the first valve device 36 may be referred to as a first exhaust port 42.

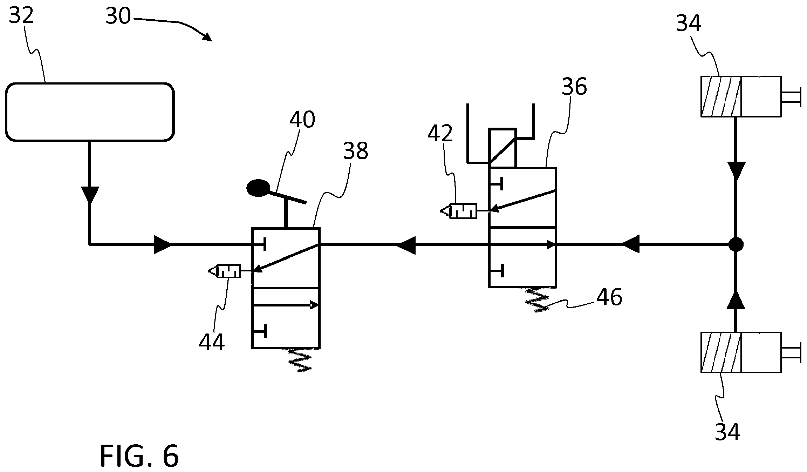

In **FIG. 6** it is instead the first valve device 36 that is in its inactivated state. Now, however, the second valve device 38, has now moved to its activated state. Pressurized air can no longer pass from the pressurized air source 32 and through the second valve device 38. Instead, now the pressurized air in the brake chambers 34 are allowed to be exhausted by passing through the first valve device 36 to the second valve device 38 and then out to the ambient via an exhaust port 44 of the second valve device 38, thereby allowing the pressurized air in the brake chambers 34 to be released through the exhaust port 44 of the second valve device 38. The exhaust port 44 of the second valve device 38 may be referred to as a second exhaust port 44.

Thus, from the above explanation of **FIGS. 4-6****,** it should now be understood that **FIG. 4** may represent a normal driving situation in which the parking brake is not engaged. The pressurized air source 32 is in fluid communication with the brake chambers 34 via the second valve device 38 and the first valve device 36, thereby pressurizing the brake chambers 34 and maintaining the parking brake in a released state. **FIG. 6** represents a normal operator-initiated engagement of the parking brake. The driver has remembered to pull the lever 40, thus activating the second valve device 38, wherein pressurized air from the brake chambers 34 is exhausted through the second exhaust port 44, thereby engaging the parking brake. Thus, unless it is indicated to the first valve device 36 that the parking brake is in released state and that the tipper body is being lifted, as well as the vehicle gear is in neutral, as well as the vehicle speed being zero or below a predefined threshold, then the first valve device 36 is in the inactivated state, thereby allowing the applying/releasing of the parking brake to be controlled by controlling the state of the second valve device 38.

**FIG. 5****,** however, illustrates the extra level of safety provided by the parking brake system of this disclosure. The operator has forgotten to engage the parking brake, i.e. has not activated the second valve device 38. The first valve device 36 has, however, received the tipping signal, the neutral gear signal and the low speed signal and has detected that the parking brake is still in the released state, and therefore moved to the activated state, whereby the pressurized air in the chambers 34 are exhausted through the first exhaust port 42 to engage the parking brake.

In **FIGS. 4-6****,** the first valve device 36 is illustrated as comprising a solenoid valve that may be energized. When the first valve device 36 is not energized then it is biased towards the inactivated state of the first valve device 36. As mentioned previously, **FIG. 4** illustrates the first valve device 36 in the inactivated state. The biasing towards the inactivated state may, for instance, be achieved by a spring device 46. When the first valve device 36 becomes energized, the first valve device 36 moves against the force of the spring device 46 to the activated state. **FIG. 5** illustrates the activated state of the first valve device 36, i.e. when the first valve device 36 has become energized. The energization of the first valve device 36 is dependent on the previously discussed reception of signals and determination of state of the parking brake. Thus, analogously with what has previously been discussed in relation to **FIG. 3****,** the first valve device 36 in **FIG. 4** becomes energized upon receipt of the tipping signal, the neutral gear signal and the low speed signal in combination with detecting that the parking brake is still in the released state (e.g. in case of a parking switch, the switch is closed when parking brake is released, allowing the parking brake signal to reach the first valve device 36).

The first valve device 36 may be energized by an energization signal triggered by the receipt of the tipping signal, the neutral gear signal and the low speed signal, in combination with the detecting that the parking brake is still in the released state. When the operator-controlled device (here in the form of the lever 40) has switched the second valve device 38 to the activated state to apply the parking brake (as in **FIG. 6****),** then any triggering of the energization signal is blocked, thereby avoiding energization of the solenoid valve of the first valve device 36. Hereby, unnecessary and superfluous energization and movement of first valve device 36 can be avoided, and thus the wear and tear of the first valve device 36 can be reduced, while providing an additional level of safety to the handling of the tipper vehicle.

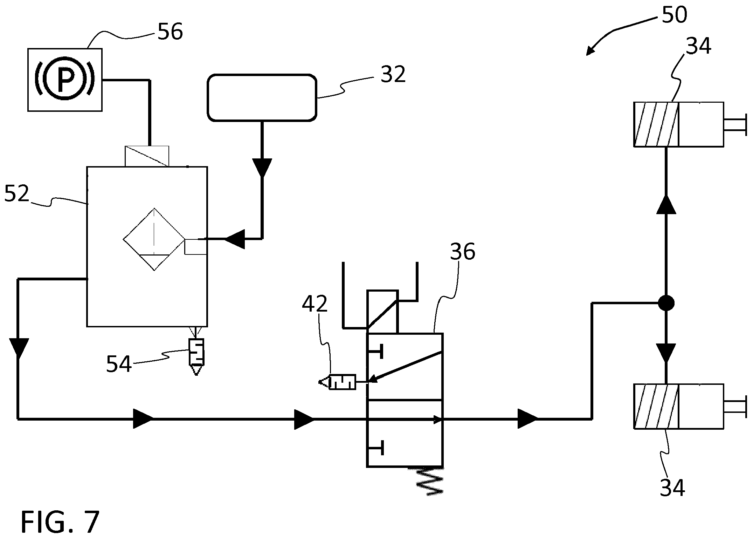

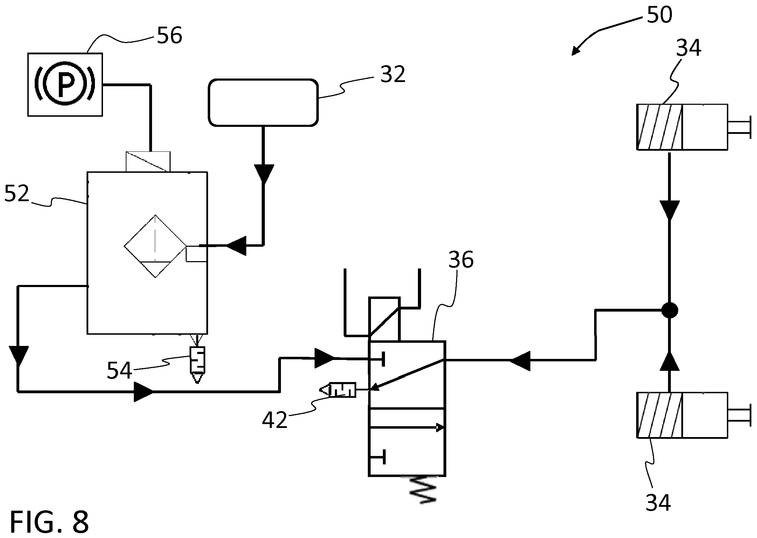

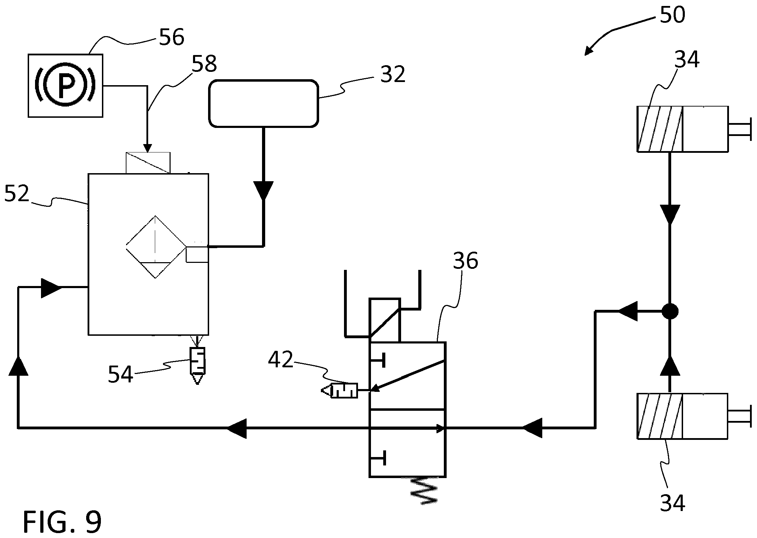

**FIGS. 7-9** illustrates schematically different states of some components in a parking brake system 50 of a tipper vehicle, in accordance with at least another example of this disclosure. While the previous example in **FIGS. 4-6** illustrates a second valve device 38 which comprises a lever-operated hand brake valve, the example in **FIGS. 7-9** instead illustrates a second valve device 52 which comprises an electronically controlled valve. The general principle is, however, similar. Thus, **FIG. 7** illustrates a case in which both the first valve device 36 and the second valve device 52 are in their respective inactivated state, wherein pressurized air is allowed to flow from the pressurized air source 32 through the second valve device 52 and then through the first valve device 36 and then into the brake chambers 34 so as to hold the parking brake in a released state. Thus, **FIG. 7** may represent a normal driving situation. In **FIG. 8** the second valve device 52 is still in its inactivated state. The first valve device 36, however, has now moved to its activated state. Although pressurized air can still pass from the pressurized air source 32 through the second valve device 52, it will no longer be allowed to continue through the first valve device 36. Instead, now the brake chambers 34 are in fluid communication with the first exhaust port 42, i.e. the exhaust port 42 of the first valve device 36, thereby allowing the pressurized air in the brake chambers 34 to be released through the first exhaust port 42. Thus, **FIG. 8** may represent a situation in which the operator has forgotten to engage the parking brake and has initiated a stationary tipping operation. The first valve device 36 has therefore, based on the lack of parking brake engagement, and the received tipping signal, neutral gear signal and low speed signal now automatically moved to its activated state, whereby the parking brake has become engaged. In **FIG. 9** the first valve device 36 is in its inactivated state while the second valve device 52 has moved to its activated state. Pressurized air can no longer pass from the pressurized air source 32 and through the second valve device 52. Instead, now the pressurized air in the brake chambers 34 are allowed to be exhausted by passing through the first valve device 36 to the second valve device 52 and then out to the ambient via the second exhaust port 54, i.e. the exhaust port 54 of the second valve device 52, thereby allowing the pressurized air in the brake chambers 34 to be released through the second exhaust port 54. Thus, **FIG. 9** may represent a normal operator-initiated engagement of the parking brake.

In the example of **FIGS. 7-9****,** the operator/driver may trigger the activation of the second valve device 52 and hence the engagement of the parking brake by actuation of an electronic parking switch 56. The actuation of the electronic parking switch 56 triggers an electrical signal 58 which is sent to the second valve device 52.

In a further example (not illustrated), the first valve device 36 may be omitted and its functionality may instead be integrated into the electronically controlled second valve device 52 by appropriate reprogramming of the logic in the second valve device 52. Thus, the second valve device 52 may, in such case, be configured to receive the tipping signal, the neutral gear signal and the low speed signal, and be configured to detect that the parking brake has not been engaged by an operator-initiated engagement (i.e. the electronic parking switch 56 has not been actuated and for example no electrical signal 58 from the electronic parking switch 56 has been received), and based on the these factors, the second valve device 52 may automatically change to its activated state, thereby causing the parking brake to become engaged.

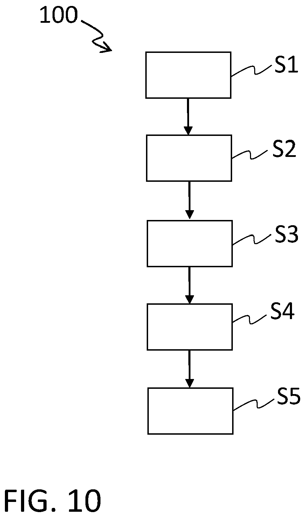

**FIG. 10** illustrates schematically a method of applying a parking brake of a tipper vehicle, in accordance with at least one example of this disclosure. More specifically, **FIG. 10** illustrates a method 100 of applying a parking brake of a tipper vehicle having a tipper body from which carried material is dispensable by tipping the tipper body, the method 100 comprising:
- in a step S 1, receiving, by a valve device, a tipping signal indicative of the tipper body being lifted,
- in a step S2, receiving, by the valve device, a neutral gear signal indicative of the vehicle gear being in neutral,
- in a step S3, receiving, by the valve device, a low speed signal indicative of the vehicle speed being zero or below a predefined threshold speed,
- in a step S4, detecting, by the valve device, the presence or absence of a parking brake signal, thereby detecting, by the valve device, whether the parking brake is in the released state or has been activated by an operator so that it is in an applied state, and
- in a step S5, upon receipt of said tipping signal, said neutral gear signal and said low speed signal, and upon detecting that the parking brake is in the released state, fluidly connecting, by the valve device, a brake chamber of the parking brake to an exhaust port of the valve device, thereby discharging air from the brake chamber to the exhaust port, causing the parking brake to be changed to the applied state.
It should be noted that the different steps do not need to be executed in the listed order. For instance, the steps S1-S4 may be performed in any order, and two, three or four of said steps S1-S4 may even be performed simultaneously. The valve device referred to in the above method 100 may be the valve device discussed in relation to the parking system of this disclosure, including any example of the parking system discussed herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A parking brake system of a tipper vehicle having a tipper body from which carried material is dispensable by tipping the tipper body, the parking brake system comprising:
- a parking brake which comprises a brake chamber which is pressurizable for releasing the parking brake,
- a valve device in fluid communication with the brake chamber, the valve device comprising an exhaust port, wherein the valve device has an activated state in which the brake chamber is in fluid communication with the exhaust port whereby air from the brake chamber is discharged, thereby applying the parking brake, and an inactivated state in which the fluid communication between the exhaust port and the brake chamber is disconnected,
- a tipping detecting device configured to send a tipping signal to the valve device, the tipping signal being indicative of the tipper body being lifted,
- a neutral gear detecting device configured to send a neutral gear signal to the valve device, the neutral gear signal being indicative of the vehicle gear being in neutral,
- a speed sensing device configured to send a low speed signal to the valve device, the low speed signal being indicative of the vehicle speed being zero or below a predefined threshold speed,
- a parking brake detecting device configured to send a parking brake signal to the valve device, wherein, by detecting the presence or absence of the parking brake signal, the valve device is configured to detect whether the parking brake is in a released state or has been activated by an operator so that it is in an applied state,
wherein upon receipt of said tipping signal, said neutral gear signal and said low speed signal, and upon detecting that the parking brake is still in the released state, the valve device is changed from the inactivated state to the activated state in order to exhaust air from the brake chamber, thereby causing the parking brake to become changed to the applied state.

2. The parking brake system of claim 1, wherein said valve device is a first valve device and said exhaust port is a first exhaust port, the parking brake system further comprising:
- a second valve device comprising a second exhaust port,
wherein when the first valve device is in the inactivated state it allows fluid communication between the second valve device and the brake chamber,
wherein the second valve device has an activated state and an inactivated stated, wherein when the first valve device is in its inactivated state and the second valve device is in the activated state, then the brake chamber is in fluid communication with the second exhaust port, whereby air from the brake chamber is discharged, thereby applying the parking brake,
wherein when the second valve device is in the inactivated state, then pressurized air from a pressurized air source is allowed to pass through the second valve device to first valve device.

3. The parking brake system of claim 2, further comprising an operator-controlled device which is operatively connected to the second valve device, thereby enabling an operator to switch between the activated state and the inactivated state of the second valve device.

4. The parking brake system of any of claims 2-3, wherein unless it is indicated to the first valve device that the tipper body is being lifted, as well as the vehicle gear is in neutral, as well as the vehicle speed being zero or below a predefined threshold, then the first valve is in the inactivated state, thereby allowing the applying/releasing of the parking brake to be controlled by controlling the state of the second valve device.

5. The parking brake system of any of claims 2-4, wherein the first valve device comprises a solenoid valve which is biased towards the inactivated state when it is not energized, wherein upon receipt of said tipping signal, said neutral gear signal and said low speed signal, and upon detecting that the parking brake is still in the released state, the valve device becomes energized to change from the inactivated state to the activated state.

6. The parking brake system of claim 5, wherein the solenoid valve is energized by an energization signal triggered by the receipt of said tipping signal, said neutral gear signal and said low speed signal, and the detecting that the parking brake is still in the released state, wherein when the operator-controlled device has switched the second valve device to the activated state to apply the parking brake, then any triggering of the energization signal is blocked, thereby avoiding energization of the solenoid valve.

7. The parking brake system of claims 2-6, wherein the second valve device comprises an electronically controlled valve, wherein the second valve device is switched to the activated state by an electrical signal triggered by actuation of an electronic parking switch.

8. The parking brake system of claims 2-6, wherein the second valve device comprises a lever-operated hand brake valve, wherein moving the lever between a first position and a second position causes the second valve to change from its inactivated state to its activated state.

9. The parking brake system of any of claims 1-8, further comprising a limit switch provided at the chassis, the limit switch forming part of the tipping detecting device, wherein when the tipper body is lifted the limit switch becomes closed and the tipping signal is sent to the valve device.

10. The parking brake system of any of claims 1-9, further comprising a speed sensor switch forming part of the speed sensing device, wherein when the vehicle speed is zero or below the predefined threshold speed the speed sensor switch becomes closed and the low speed signal is sent to the valve device.

11. The parking brake system of any of claims 1-10, further comprising a gear switch forming part of the neutral gear detecting device, wherein when the vehicle gear is in neutral state, the gear switch becomes closed and the neutral gear signal is sent to the valve device.

12. The parking brake system of any of claims 1-11, further comprising a parking brake switch forming part of the parking brake detecting device, wherein when the parking brake is activated by an operator so that the parking brake becomes applied, then the parking brake switch becomes opened and the parking brake signal is disconnected from the valve device.

13. A tipper vehicle comprising the parking brake system of any of claims 1-12.

14. The tipper vehicle of claim 13, wherein the tipper vehicle is a tipper truck or a tractor trailer tipper truck.

15. A method of applying a parking brake of a tipper vehicle having a tipper body from which carried material is dispensable by tipping the tipper body, the method comprising:
- receiving, by a valve device, a tipping signal indicative of the tipper body being lifted,
- receiving, by the valve device, a neutral gear signal indicative of the vehicle gear being in neutral,
- receiving, by the valve device, a low speed signal indicative of the vehicle speed being zero or below a predefined threshold speed,
- detecting, by the valve device, the presence or absence of a parking brake signal, thereby detecting, by the valve device, whether the parking brake is in the released state or has been activated by an operator so that it is in an applied state, and
- upon receipt of said tipping signal, said neutral gear signal and said low speed signal, and upon detecting that the parking brake is in the released state, fluidly connecting, by the valve device, a brake chamber of the parking brake to an exhaust port of the valve device, thereby discharging air from the brake chamber to the exhaust port, causing the parking brake to be changed to the applied state.

16. The method of claim 15, wherein said valve device is the valve device of the parking brake system of any one of claims 1-12.
